# EUROPEAN PATENT SPECIFICATION

(11) **EP 2 791 947 B1**
(45) Date of publication and mention of the grant of the patent: **08.03.2023**
(21) Application number: 12798333.6
(22) Date of filing: 11.12.2012
(51) Int. Cl.: B29L 30/00, B82Y 30/00, B29B 17/04, H01B 1/24, C08K 3/04, C09C 1/48, B29B 17/02

(54) **USE OF CARBON BLACK TO PRODUCE COMPOUNDS OF DEFINED VOLUME RESISTIVITY**
VERWENDUNG VON RUSS ZUR HERSTELLUNG VON VERBINDUNGEN MIT DEFINIERTEM SPEZIFISCHEM DURCHGANGSWIDERSTAND
UTILISATION DE NOIR DE CARBONE POUR PRODUIRE DES COMPOSÉS DE RÉSISTIVITÉ À VOLUME DÉFINI

(30) Priority: 12.12.2011 US 201161569298 P; 12.12.2011 EP 11192994
(43) Date of publication of application: 22.10.2014
(73) Proprietor: Circtec Knowledge Ltd., London W1W 7LT (GB)
(72) Inventor: PROBST, Nicolaus, 1200 Bruxelles (BE); LÖFFLER, Martin, 10178 Berlin (DE)
(74) Representative: Smith, Julian Philip Howard
(86) International application number: PCT/EP2012/075132
(87) International publication number: WO 2013/087651

(56) References cited:
- EP-A1- 0 109 824
- US-A1- 2010 249 353
- DUFEU J B ET AL: "PVC FILLED WITH VACUUM PYROLYSIS SCRAP TIRES-DERIVED CARBON BLACKS: AN INVESTIGATION ON RHEOLOGICAL, MECHANICAL, AND ELECTRICAL PROPERTIES", JOURNAL OF APPLIED POLYMER SCIENCE, JOHN WILEY & SONS, INC, US, vol. 46, no. 12, 25 December 1992 (1992-12-25), pages 2159-2167, XP000335448, ISSN: 0021-8995, DOI: 10.1002/APP.1992.070461212
- "Preparation of a convenient filler for thermoplastics by pyrolysis of rubber powder recovered from tyres", JOURNAL OF ANALYTICAL AND APPLIED PHYSICS, vol. 3, 1981, pages 83-89, XP002677674,
- D. PANTEA, H. DARMSTADT, S. KALIAGUINE, C. ROY: "Heat-treatment of carbon blacks obtained by pyrolysis of used tires. Effect on the surface chemistry, porosity and electrical conductivity", JOURNAL OF ANALYTICAL AND APPLIED PYROLYSIS, vol. 67, 2003, pages 55-76, XP002677675,

## Description

The present invention pertains to the field of electrically conductive polymer-based materials. In particular, the invention pertains to the use of carbon black for incorporation into a polymer to produce a compound having a defined volume resistivity, methods for producing such compounds and use of such compounds as antistatic or conductive materials.

Most polymer-based materials are inherently electrically insulating materials. However, imparting electrical conductivity can add significant value or utility. For example, imparting electrical conductivity to polymers enables electrostatic painting in automotive bumpers and can reduce creation and storage of static electricity. Electrically conductive polymer materials can also be used for protecting sensitive electronic components. Among the possible applications of electrically conductive or antistatic materials are:
- High voltage cables as conductor and insulator shield;
- Antistatic packaging material for electronics and explosive materials: boxes, sheets, bags, containers;
- Antistatic equipment for electronics and explosives industry: flooring, work surface, clothes, shoes etc.; or
- Heating elements: car seats, mobile homes.

However, other uses will be apparent to the skilled artisan in the field of conductive polymers.

In general, different performance regions of electrical conductivity of polymer-based materials can be distinguished: (1) Antistatic applications usually involve materials that exhibit surface resistivity of 10¹² to 10⁶ Ohm.cm. (2) Applications where electrical current or charges have to be transported, e.g., as heating elements, need resistivities below 10⁶ Ohm.cm. Also electrostatic dissipation (ESD) applications usually involve imparting sufficient conductivity to polymer-based materials.

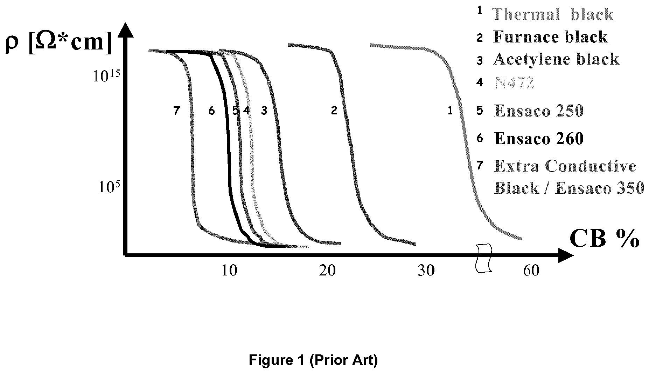

A typical way of conferring electrically conductive properties to inherently electrically insulating polymers involves the incorporation of carbon black as described, e.g., in EP 0109824. Usually, the addition of conductive additives like carbon black to highly resistive polymers like polyolefin results in an evolution of the resistivity as shown in Figure 1.

The evolution of the resistivity, called percolation curve, is characterized by mainly 3 parameters:
1. Percolation threshold: The carbon black concentration at which the resistivity begins to drop.
2. Slope (percolation zone): The drop of the resistivity after the percolation threshold down to the beginning of a flattening.
3. Ultimate resistivity level: The level the resistivity reaches asymptotically at high carbon black concentration.

From Figure 1 it is apparent that resistivity levels between, e.g., 10¹² and 10⁴ Ohm.cm, which may be desirable for antistatic applications, are difficult to achieve as the slope, i.e., the drop of resistivity, occurs with a minimum variation of the carbon black content. That is, between the percolation threshold and the ultimate level a variation of the carbon black content by only 3 % (w/w) results in most cases in a change of the resistivity that amounts to 14 orders of magnitude, namely from 10¹⁵ Ohm.cm to 10¹ Ohm.cm. In other words, a variation of the carbon black content by 0.2 % (3/14 %) (w/w) already changes the resistivity level by one order of magnitude.

As a consequence, compounds having defined electrical resistivity levels between the plateau before the percolation threshold on the one hand, i.e., at the level of the virgin polymer, and the ultimate resistivity level on the other hand cannot be manufactured with acceptable reproducibility and stability. This applies even more as the standard deviation in compounding exceeds usually 0.5 % (w/w). Also, a safety margin must usually be built into the recipe in order to cover variations to be brought to the resistivity during processing.

The prior art addresses this problem by adding further resistivity adjusting additives, with limited success in some specific polymers, however. Moreover, additional compounds may detrimentally affect mechanical and/or optical properties of the resulting materials.

EP 0109824 discloses an electrically conductive plastic complex material which comprises a mixture of the synthetic base resin material, an electrically conductive carbon black and at least one inorganic filler selected from graphite, calcium carbonate, talcum, alumina and titanium. EP 0109824 does not relate to carbon black obtainable through pyrolysis.

US2010249353 relates to the field of waste recycling, and particularly, to methods for reclaiming carbonaceous materials from scrap rubber tires and pyrolytic carbon black produced from such methods. US2010249353 does not disclose conductivity characteristics with respect to the carbon black obtained.

Dufeu, 2296 Journal of Applied Polymer Science 46 (1992), No.12, relates to PVC filled with vacuum pyrolysis scrap tires-derived carbon blacks and investigates rheological, mechanical, and electrical properties thereof. Dufeu does not disclose conductivity characteristics of PVC loaded with pyrolysis carbon black beyond the percolation threshold.

Boukadir, Journal of Analytical and Applied Pyrolysis, 3 (1981) p. 3, relates to the preparation of a filler for thermoplastics by pyrolysis of rubber powder recovered from tyres. Boukadir does not address conductivity characteristics with respect to pyrolysis carbon black.

Pantea, Journal of Analytical and Applied Pyrolysis 67 (2003) 55-76, discusses the heat-treatment of carbon blacks obtained by pyrolysis of used tires and investigates their effect on the surface chemistry and porosity of materials. Pantea does not investigate conductivity characteristics with respect to pyrolysis carbon black, either.

There remains a need for reproducible and cost-effective ways to produce polymer-based compounds of defined or predetermined volume resistivity, particularly in the range between 10¹² and 10⁴ Ohm.cm, in a convenient manner.

This problem is solved by the methods and compounds defined in the independent claims. Preferred embodiments are specified in the dependent claims.

Due to the use of carbon black according to the invention the slope of the decrease of the resistivity with increasing carbon black content can be reduced. For example, the 14 orders of magnitude of the resistivity can be covered by a variation of the carbon black content by 40 %. This means that typically a range of about 3 % of carbon black can be available per order of magnitude of resistivity.

Accordingly, the present invention is directed to a method for producing a carbon black-containing polyolefin compound having a defined or predetermined volume resistivity, wherein the carbon black is obtainable by pyrolysis of carbon black filled crosslinked and/or uncrosslinked polymers. Hence, a compound having a defined volume resistivity can be produced by incorporating carbon black obtainable by pyrolysis of carbon black filled crosslinked and/or uncrosslinked polymers into a polyolefin polymer in an amount above the percolation threshold. In particular, the carbon black can be incorporated into the polymer such that an alteration of the carbon black content by ± 0.5 % (w/w) within the percolation zone does not alter the volume resistivity of the resulting compound by more than a factor of 10. Percolation zone in this context means the zone between the percolation threshold and the ultimate resistivity level. It typically encompasses at least the zone between two orders of magnitude of volume resistivity below the volume resistivity level of the virgin (unloaded) polymer and one order of magnitude of volume resistivity above the ultimate resistivity level of the carbon black loaded polymer having minimum volume resistivity.

Polymer in the context of the present invention means any type of large molecule (macromolecule) composed of repeating structural units. A polymer that contains only a single type of repeat unit is known as homopolymer, while a polymer containing a mixture of repeat units is known as copolymer. For example, in the present invention, the polymer in which the carbon black is to be incorporated is a polyolefin, e.g., a low-density polyethylene. Examples of polyolefin polymers are Low Density Polyethylene (LDPE), High Density Polyethylene (HDPE), Polypropylene (PP). Exemplary polymers in which the carbon black can be incorporated are Polyethylene (PE), Polypropylene (PP). However, it will be understood that the carbon black can also be incorporated in Crosslinked Polyethylene (XLPE), and Chlorinated Polyethylene (CSM, CPE).

Also comprised by the term polymer in the context of the present invention is a mixture of two or more polymers.

The term crosslinked polymer means that the polymer molecules have been submitted to a crosslinking between molecules by for example sulphur or peroxide or any other technique like electron beam radiation creating bridges between the macro-molecules.

A filled polymer generally means a polymer in which one or several fillers have been incorporated. Possible examples of fillers are carbon black, white fillers such as kaolin and talc, and others. Depending on the polymer and its intended application the amount of carbon black as filler varies typically between 5-80 % (w/w) or between 10-50 % (w/w), particularly in the case of tires. In the present invention, useful carbon black filled polymers to be pyrolysed may contain between 1-80 % (w/w) carbon black, particularly between 10-70 % (w/w) carbon black, of the total weight of the filled polymer.

Pyrolysis in the context of the present invention means any kind of thermal degradation in the absence of oxygen. Pyrolysis, or depolymerisation, particularly of crosslinked and/or uncrosslinked polymers filled with carbon black, is usually carried out at temperatures between 350 and 900 °C, especially 400 to 550 °C. Pyrolysis may be performed in the presence of one or more catalysts or additional mechanisms such as microwave irradiation in order to accelerate or facilitate the decomposition, which could result in a decrease in the amount of time and/or temperature needed for decomposition.

Absence of oxygen means that the pyrolysis is performed in an environment which is essentially oxygen-free, e.g., in a liquid and/or gaseous oxygen-free medium, or in vacuum.

In a preferred embodiment the carbon black is obtainable by pyrolysis of cured or uncured rubber compounds containing carbon black, particularly of used tires. Cured rubber compounds are crosslinked (mainly sulphur or peroxide) rubber based compounds. Typical examples of cured rubber compounds are tires, hoses, or seals. Uncured rubber compounds are the above mentioned compounds prior to cross-linking.

In general, the pyrolysis process can be a continuous or a batch process whereby the temperature can be in the range between 350°C and 600°C, particularly between 450°C and 550°C. The pressure is typically kept in the range between 101 KPa and 120 KPa.

The carbon black as described herein is obtainable by a process comprising
a) pyrolysis of filled crosslinked and/or uncrosslinked polymers, particularly cured or uncured rubber compounds, particularly used tires, to obtain a pyrolysate;
b) optionally, treatment of the pyrolysate with inert gas(es) or gaseous reagent(s) during and/or after pyrolysis;
c) mechanical treatment of the pyrolysate to separate carbon black from residues such as metals and/or textiles;
d) optionally, treatment of the pyrolysate with liquids leaching surface components and/or modifying the surface;
e) grinding the carbon black into particles; and
f) optionally, pelletizing or compacting the carbon black.

The optional treatment of the pyrolysate with inert gas(es) in step b) is useful to purge the oven and/or to avoid condensation of residual molecules from the pyrolysis process or gaseous reagents used to aftertreat the pyrolysis carbon black to obtain specific reinforcing or curing characteristics. Inert gases can be nitrogen, argon, and the like.

The mechanical treatment in step c) to separate metals can be carried out by magnetic separation or eddy current separation and the textiles or other solid contaminants can be separated by sieving or air stream.

Optionally, the pyrolysate can be treated with liquids in step d) to modify its surface chemistry and/or to leach inorganic compounds deposited on its surface. This treatment can be carried out by processing the carbon black as a slurry in vessels. Further steps to wash and dry the material may be used.

In step e) the carbon black can be grinded into finest particles of < 45 µm, especially < 10 µm diameter, for example by jet mill and/or shock wave treatment. The grinding step may comprise a step to produce a delivery form of carbon black. This step is useful in most cases in order to assure a carbon particle size suitable for a good wetting by the polymer and also not to interfere with the finishing processing and to guarantee a smooth surface.

Optionally, the process may further comprise a pelletization step to form pellets of the carbon black particles. Pelletization may be achieved by (1) production of small beads by a so-called wet process, mixing the carbon powder with water with or without pelleting additives (i.e. molasses) and followed by a drying step; or (2) production of beads by a dry process based on an electrostatic agglomeration produced in a rotating drum due to friction between the carbon particles. Alternatively, the carbon black particles can be compacted to form a densified powder for transport and handling reasons. Further explanation is given in "Kühner, G; Voll, M; Chapter 1, Manufacture of Carbon Black, Carbon Black Second Edition, Ed. J.B. Donnet, R.C. Bansal, Meng-Jiao Wang, Marcel Dekker", which is incorporated herein by reference in its entirety.

One characteristic property of carbon black obtainable by pyrolysis of filled crosslinked and/or uncrosslinked polymers, particularly by the above described process, is an ash content of about 1 % or more (w/w), for example of between 1-30 % (w/w), particularly of between 5-25 % (w/w) or 12-20 % (w/w) of the total weight of the carbon black.

The ash content of a carbon black is the amount of non-carbon components present after combustion. It is determined according to ASTM D 1506. Primary contributants to ash are usually SiO₂, ZnS, and ZnO and, depending on the starting material, also CaO or other white fillers or additives.

The carbon black can further be characterized by a volume resistivity of between 0.02-1.0 Ohm.cm, particularly of between 0.08-0.2 Ohm.cm, more particularly of about 0.1 Ohm.cm. The volume resistivity of the carbon black is measured according to ASTM D 6086 9a. This test method covers a procedure to measure a carbon black structure property known as "void volume". Compressed void volumes are obtained by measuring the compressed volume of a weighed sample as a function of applied pressure in a cylindrical chamber by a movable piston with a displacement transducer on the piston mechanism. A profile of void volume as a function of applied pressure provides a means to assess carbon black structure at varying levels of density and aggregate reduction. Concurrently, and following the procedure of ASTM D 6086 9a, the volume resistivity of the sample can be measured as described in "Grivei, Eusebiu; Probst, Nicolas; Conductivity and carbon network in polymer composites, Kautschuk, Gummi, Kunststoffe-9-2003", which is incorporated herein by reference in its entirety.

The invention is directed to a method for producing a compound having a defined volume resistivity, comprising incorporating carbon black as defined above into a polyolefin polymer. In a particular embodiment the carbon black is incorporated in an amount of between 5-80 % (w/w), particularly 10-60 % (w/w), more particularly 15-50 % (w/w), of the total weight of the resulting compound.

Particularly useful concentrations may depend on the type of polyolefin polymer and possible other components of the compound. For a given polymer the skilled person is able to identify particularly useful carbon black values by performing routine tests with different carbon black concentrations, such as described in, e.g., "Probst, Nicolas; Chapter 8, Conductive carbon blacks, Carbon Black Second Edition, Ed. J.B. Donnet, R.C. Bansal, Meng-Jiao Wang, Marcel Dekker".

The incorporation of the carbon black into the polyolefin polymer can be achieved by mixing carbon black and polyolefin polymer in an internal mixer or mixing extruder, mixing in a dry blender followed by an extruder or any other mixing equipment used for mixing polymers, or blending the carbon black with the polyolefin polymer during the polymerization step.

It is thus possible to produce a compound of defined volume resistivity without the addition of any further resistivity adjusting additives. However, in certain cases it can be beneficial to incorporate one or more additional additives, also resistivity modifying, i.e., resistivity increasing or decreasing additives. Suitable additives can be the different types of carbon black described in the prior art. Suitable additives can also be natural, synthetic, or expanded graphite; white fillers such as kaolin, CaCO₃, talc, or clay; non miscible polymers; or polymer cristallites.

Also provided by the present invention is a compound of defined volume resistivity as defined in claim 10. In a particular embodiment the carbon black is present in an amount of between 5-80 % (w/w), particularly 10-60 % (w/w), more particularly 15-50 % (w/w), of the total weight of the compound. The compound has a volume resistivity of between 10²-10¹² Ohm.cm or between 10⁴-10¹² Ohm.cm.

The volume resistivity of the compound is measured according to ASTM D 991 for the range ≤ 10⁶ Ohm.cm and to ASTM D 257 for the range > 10⁶ Ohm.cm. (general usage also in plastics). ASTM D991 is a standard test method for rubber property-volume resistivity of electrically conductive and antistatic products. In general, surface resistivity and volume resistivity are measured according to ASTM D257, IEC 60093. Surface resistivity is the resistance to leakage current along the surface of an insulating material. Volume resistivity is the resistance to leakage current through the body of an insulating material. The higher the surface/volume resistivity, the lower the leakage current and the less conductive the material is.

The test procedure according to ASTM D 991 and also ASTM D 257 involves that a standard size specimen is placed between two electrodes. For sixty seconds, a voltage is applied and the resistance is measured. Surface or volume resistivity is calculated, and apparent value is given (60 seconds electrification time). Specimen size: A 4-inch disk is preferable, but may be any practical form, such as flat plates, rods or tubes for insulation resistance. Data: Surface and Volume resistivity are calculated. Surface Resistivity is expressed in ohms (per square). Volume Resistivity is expressed in Ohm.cm.

From these methods one can generate the percolation curve and determine the percolation threshold as the value of carbon black concentration at which the resistivity of the compound begins to drop significantly. The percolation threshold is considered as the lowest value of carbon black concentration at which the addition of one further weight percent carbon black into the polymer would result in a drop of resistivity of the resulting compound by more than a factor of 3, particularly more than a factor of 5. It will be understood that the ultimate resistivity level in a similar manner is considered as the highest value of carbon black concentration at which the removal of one weight percent carbon black from the polymer would result in an increase of resistivity of the resulting compound by more than a factor of 3, particularly more than a factor of 5.In another aspect, the invention is directed to the use of such compounds as an antistatic or conductive material.

In the following the invention is further explained with reference to the accompanying figures, which illustrate exemplary and non-limiting examples of the invention.
Figure 1 shows the evolution of the volume resistivity of low density polyethylene (LDPE) as a function of the content of different types of prior art carbon black.
Figure 2 shows the evolution of the volume resistivity as a function of carbon black content of an exemplary compound according to the present invention.
Figure 3 illustrates the evolution of the meltflow index of an exemplary compound according to the present invention with increasing carbon black content.
Figure 4 shows a typical agglomerate of exemplary carbon black.
Figure 5 shows the primary particle size distribution of exemplary carbon black measured by ASTM D 3849.
Figure 6 shows the aggregate size distribution of exemplary carbon black measured by ASTM D 3849.
Figure 7 shows the void volume of exemplary carbon black.

With reference to Figure 1, typical percolation curves of compounds are shown that result from the addition of different types of prior art carbon black to LDPE (low density polyethylene), a highly resistive polymer. Tested carbon blacks were thermal black, furnace black, acetylene black, N-472, Ensaco 250, Ensaco 260, and Extra Conductive Black/Ensaco 350.

All compounds were based on the same LDPE grade and have been mixed in a laboratory mixer type Brabender (50 ml volume chamber). The mixing cycle was (in minutes): 0' Polymer; 2' carbon black; 7' Stop mixing. 2 mm plates were prepared by compression at 180°C for 10 min.

N-472 stands for Carbon Black Grade N-472, which is obtained in a continuous process in the furnace by a thermal-oxidative decomposition of highly aromatic hydrocarbon oil. It belongs to low reinforcing grades of carbon black and it shows low values of dispersion and structural features. Carbon Black Grade N-472 can be obtained from all major carbon black producers (e.g., Cabot, Columbian).

All tested types of prior art carbon black have in common that once the percolation threshold is exceeded the resistivity of the compound dramatically drops over several orders of magnitude with a minimum increase of carbon black content. In the tested examples, the slope is characterized in that a 3 % increase in the carbon black content results in a change of the resistivity of the compound from 10¹⁵ Ohm.cm to 10¹ Ohm.cm, respectively. In the case of Carbon Black Grade N-472, for example, a content of about 11 % (w/w) carbon black results in a volume resistivity of the compound of about 10¹⁵ Ohm.cm, whereas a content of about 14 % (w/w) carbon black grade N-472 leads to a volume resistivity of about 10 Ohm.cm. Apparently, a desired resistivity level in the range between, e.g., 10¹² and 10⁴ Ohm.cm, can hardly be adjusted with such carbon blacks.

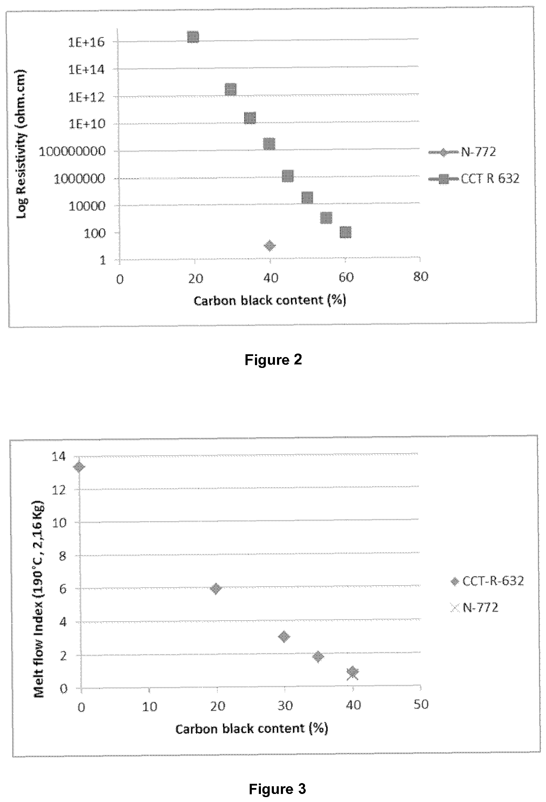

Figure 2 shows the evolution of the volume resistivity of LDPE as a function of the content of CCT R 632 Pyrolysis carbon black, which is exemplary for the present invention. CCT R 632 Pyrolysis carbon black is a carbon black produced by the pyrolysis of used tires and is described in more detail in the example section below. The LDPE of this particular example is Elite 5800G, MFI: 12; Density: 0,911 produced by Dow Chemicals.

It can be seen from Figure 2 that the volume resistivity of the tested compound also drops from 10¹⁵ Ohm.cm to 10¹ Ohm.cm with increasing amounts of carbon black. However, the slope or rate of the drop is greatly reduced. That is, the slope begins at a carbon black content of about 20 % (w/w), whereas the ultimate resistivity level is not reached before a carbon black content of 60 % (w/w) of the total weight of the compound. Hence, in this particular example the 14 orders of magnitude of the resistivity are covered by a variation of the carbon black content by 40 %. This means that in this example a range of about 3 % of carbon black is available per order of magnitude of resistivity.

As a consequence, the range of allowed carbon black content in a compound having an intended defined volume resistivity is expanded. In other words, a slight alteration of the carbon black content within the percolation zone, e.g., by ± 0.5 % (w/w), does not overly alter the volume resistivity of the resulting compound, e.g., not more than a factor of 10. In certain embodiments, an alteration of the carbon black content by ± 1.0 % (w/w), particularly by ± 1.5 % (w/w), does not alter the volume resistivity of the resulting compound by more than a factor of 10 within the percolation zone. It is thus possible to achieve a desired resistivity level in the range between, e.g., 10¹² and 10⁴ Ohm.cm, simply by properly dosing the amount of carbon black.

Figure 3 illustrates the evolution of the meltflow index, measured at 190 °C at 2.16 kg, with increasing carbon black content. CCT pyrolysis black imparts at 40 % the same viscosity as N-772. This result suggests that, in applications where viscosity and rheological behavior of the resulting material are of concern, CCT black is suitable for compounding similar to N-772.

In the following, non-limiting examples of the invention are described.

### EXAMPLES

CCT R 632 and CCT R 610 (herein referred to as CBp) are carbon blacks produced by the pyrolysis of used tires. The pyrolysis is performed in a 10m³ batch reactor. The reaction itself is endothermic and a small (10-80 mbar) overpressure is set throughout the whole process. During the process the crosslinked and/or uncrosslinked polymers, e.g., used tires are kept at a temperature between 420°C and 600°C in the reactor for 2-6h. After the reaction time is over, the reactor is cooled to room temperature and the carbon char is collected.

The pyrolysis process results in two product streams, one gaseous, collecting the products from the depolymerisation of the polymers, and one solid phase, the metal from the wires and the carbonaceous part combining carbon black, ashes and carbonaceous residue. The process is carried out without any specific additive participating directly or indirectly in the process.

The gaseous phase is to a large extent condensed into the pyrolysis oil. The metal is separated from the carbonaceous material. The latter one is converted into particles with sizes of a maximum of 32 µm for CCT R 632 and 10 µm for CCT R 610, respectively, and pelletized for conditioning and transport.

CBp is, according to Reach (Regulation, Evaluation, Authorization and Restriction of Chemicals described in EC 1907/2006), classified as original carbon black from partial combustion processes, as long as the concentration of the original material, in this case carbon black, is at least 80 %.

### 1 Analytical Properties

### 1.1 Morphology of the Pyrolysis Carbon Black

CBps have to be considered using the same criteria as other carbon blacks, some methods used however have to be adapted to this new material. Two reasons for the specific treatment of CBp are the feasibility of the test and the significance of the test results. Table I summarizes the most common parameters.

**Table I**

| | **norm** | **unit** | **value** |
|---|---|---|---|
| Nitrogen surface area | ASTM D6556 | m²/g | 69 |
| CTAB surface area | ASTM D3765 | m²/g | 62 |
| Void Volume | ASTM 6086 9a | cm³/g | 0,70 |
| OAN | ASTM D2414 | ml/100g | 106 |
| COAN | ASTM D3493 | ml/100g | 84 |

### 1.2 Particle Size

Carbon black particle size is determined by image analysis of a finely dispersed sample as described by ASTM D 3849. Particle size of classical carbon black is understood as being the size of the primary particle. Those particles are fused together in the aggregate and agglomerate to larger entities. Particle size can also be calculated with a quite good compliance from the value of the specific surface area. Typical classical carbon blacks range from 11 nm to 250 nm for thermal black, the coarsest material. These nanoparticles are believed to provide the largest contribution to the specific surface area.

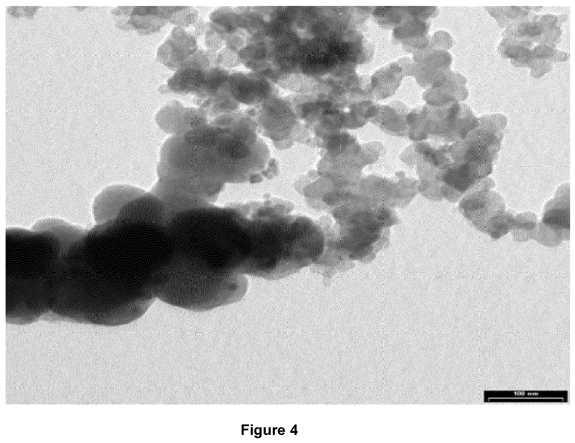

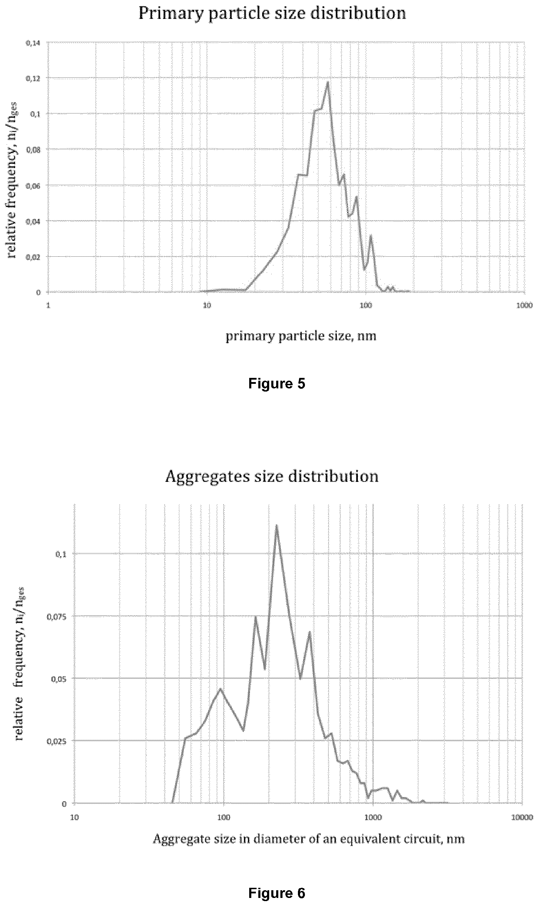

Figure 4 shows a typical agglomerate (TEM image from CBp (Origin: M.A.S. Freiburg Germany) bar =100 nm). Figure 5 shows the primary particle size distribution measured by ASTM D 3849 (data origin: Maas M.A.S. Freiburg Germany). Figure 6 shows the aggregate size distribution by ASTM D 3849 (data origin: M.A.S. Freiburg Germany).

CBps show a very complex particle size distribution. A large part of the particles remain more or less at their original size and give by TEM image analysis a broad distribution resulting from the variety of the various blacks present in a passenger car tire. A second group of particles results from the grinding of macroscopic solid parts into relatively large items.

Laser scattering can be used to determine the particle size distribution of those elements. The results could, however, be misleading, as the laser scattering gives the size of the entities visible to this technique and as such may represent an aggregate form or even an agglomerate. The interpretation of the results appears to be quite complex as laser scattering is not a commonly used method for the determination of particle size for classical carbon blacks in the nano-meter range.

Figures 5 and 6 illustrate the primary particle and aggregate size distribution according to measurements made following ASTM D 3849. It was observed that the average primary size is quite in line with the average particle size of the carbon blacks present in a tire. Using this value to calculate the specific surface area one obtains 60 m²/g which corresponds to the 62 m²/g of CTAB S.A.. These observations are in line with the work presented by Donnet and Schuster (J.-B. Donnet, R. Schuster; IRC, May 2006).

Aggregate size distribution shows an average entity of 200 nm and ranges from 50 nm to 1000 nm, while the average of the blacks used in a tire averages around 140 nm. This observation is in line with the supposition that during pyrolysis, aggregates are fused together by the pyrolysis deposits.

In the literature CBps are usually reported with a Bi- or Tri-modal distribution. The first peek being most probably related to the original carbon black particles, in most cases slightly shifted to larger particles due to small surface deposits during pyrolysis. The two other peaks represent the particles generated during grinding. These larger micrometric particles have a very low if not negligible contribution to the specific surface area.

### 1.3 Specific Surface Area

For fillers specific surface area is a very important parameter determining the extension of the surface area available for polymer-filler interaction. Various techniques are available for the determination of the specific surface area. The commonly used iodine number is not suitable for use with pyrolysis carbon black. Iodine number observed reaches unrealistic values due to the interference of pyrolysis residues and ash.

Nitrogen surface area can be applied as inert N₂ molecules are adsorbed. Nitrogen surface area is sensitive to the presence of micro- and nano-pores and is consequently also a measure of the reproducibility of the pyrolysis process. The rubber industry is commonly considering the round surface (surface area accessible to the large polymer molecules) as significant for predicting the performance in the compound. CTAB method can be replaced by STSA surface area (calculated from BET) as it gives quite similar information. Both techniques Nitrogen surface area and CTAB are applicable to CBp.

### 1.4 Surface Chemistry

Besides the extension of the polymer accessible surface area, the quality of the surface determines the reinforcement properties. Defects in carbon black graphitic surface texture and plane edges as well as fullerene like elements are considered responsible for the reinforcement phenomena. Inverse Chromatography (IGC) has been used with furnace blacks to assess the surface energy and active sites at finite and infinite dilution.

Similar information was expected when IGC was performed on CBp.

Maafa and co-workers (D. Maafa, J. Balard, J.-B. Donnet ; KGK April 2011, p 24-28) showed that CBp does not have any significant surface activity. This fact is explained by the coverage of the original active sites by the pyrolysis inorganic parts and carbon deposit. This observation is in line with the expectation that all active sites will primarily react with the pyrolysis residues. Considering this fact, it can be concluded that the extension of the surface is not very relevant to the information one could expect for predicting the reinforcing potential of CBp. The surface of CBp can be considered as inert in comparison with furnace black of similar specific surface area and results in lower reinforcing activity, as will be demonstrated below.

The pH of CBp is quite neutral, reflecting to a large extent the mineral nature of the carbon surface.

Electrical measurements by compression on the powder show that the contacts with the carbon are relatively resistive in comparison with conventional furnace black. Conventional furnace black has a quite graphitic surface while CBp has ash and saturated carbon on the surface. As one can see from Table II below, the electrical resistivity of CBp lies in-between pure and oxidized furnace black. This subject was already discussed by Paneta and co-workers (H. Paneta, H. Darmstadt, S. Kaliaguine, S. Blacher, C. Roy, ACS Rubber Division spring meeting 2001). The authors documented their conclusions with tof-SIMS data showing the reduced graphitic nature of CBp.

**Table II**

| | **Volume Resistivity (Ohm.cm)** |
|---|---|
| Pyrolysis CB | 0,1 |
| N-550 | 0,01 |
| Oxidized CB | 3 |

| | |
|---|---|
| CBp intrinsic resistivity in comparison with a furnace black and an oxidized carbon black | |

### 1.5 Structure

Structure designates the interstitial and inter-particle volume of the carbon black and is in fact the result of the size and complexity of the arrangements of the carbon black particles within the aggregate and their agglomeration.

OAN, Oil Absorption Number, is the most common technique for the assessment of the structure of carbon black. The method given in ASTM D 2414 determines the structure of a carbon black by the determination of the saturation of the carbon black by the addition of oil. The saturation is achieved when the torque of the mixer incorporating the oil is suddenly increasing. This method is functioning very well with most furnace blacks, some blacks however show a very small increase in torque when the end point is reached and OAN is difficult to measure. The use of blends of those blacks with very high structure carbon blacks usually allows overcoming this problem. This is the case with most CBps. The direct measurement of the void volume is as such a method suggested for CBps for structure determination.

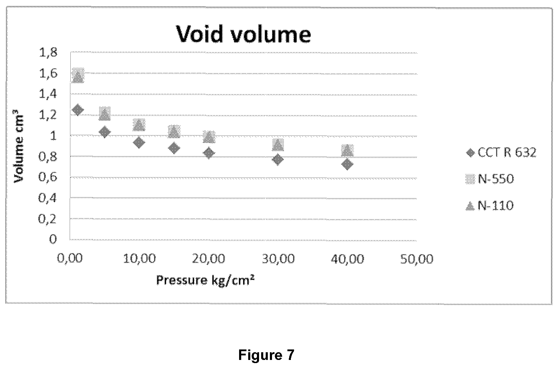

Figure 7 shows the void volume of CCT R 632, N-550, and N-110 carbon black, respectively.

The void volume of the CBp is slightly below that of N-550. The original structure of the carbon black has been reduced during incorporation and most probably during the grinding step of the CBp. One can expect that the structure will not be broken down during further mixing steps. Figure 7 shows the evolution of the void volume with increased pressure for CCT R 632, N-550 and N-110.

COAN, Oil Absorption Number on the compressed carbon blacks is feasible with the method described in ASTM D 3493. This value, developed to assess the structure level of a carbon black after incorporation of the compound, is for the CBp comparable with the one obtained for N-550.

It can be expected that the information available from structure measurements is quite comparable with the one observed for furnace blacks. Others indicate that also here the original meaning of the carbon black parameter has to be considered with care.

### 2 Composition of pyrolysis carbon black

The analysis of CBp as shown in Table III describes the mass composition of the material. Surface deposits resulting from the pyrolysis are deposited on the surface of the original particles. The performance of a filler in a polymer, its interaction with the polymer as well as its ability to interact with neighbour particles to form filler networks is mainly related to the surface quality of the material.

**Table III**

| **Chemical characteristic** | **norm** | **unit** | **CCT-R-632** |
|---|---|---|---|
| Ash (SiO₂, ZnS, ZnO and other metal oxides) | ASTM D1506 | % | 14 |
| Carbon Content | DIN 51732 | % | 82 |
| | CEN/TS 15104 | | |
| Oxygen | EDX | % | 9 |
| Sulphur | DIN EN 14582 / CEN/TS 15408 | % | 2,5 |

| | | | |
|---|---|---|---|
| Origin: Fraunhofer Institut IWM, Halle Germany and GMBU, Halle Germany) | | | |

### 2.1 Carbonaceous Components in CBp

The main carbonaceous component of the CBp is the original carbon black. X-ray Photoelectron Spectroscopy (XPS) allows an analysis of the elemental composition of the surface. According to the analysis of several samples, carbon represents 94% of the surface followed by Zn, Si and S.

The elemental composition depends mainly on the composition of the raw material (e.g., used tire). The nature of the links between elements may vary with the pyrolysis process and operating conditions.

Darmstadt and co-workers (H. Darmstadt, C. Roy, S. Kaliaguine, Carbon, Vol. 33, N°10, pp 1449-1455, 1995) have studied carbon blacks from vacuum pyrolysis by XPS. It has been shown that the major part of the carbon is graphitic, most probably resulting from the original carbon black. The remaining carbon is mainly involved in -C-O and C=O bindings.

It has further been shown that the largest part of the oxygen is in C=O and Si-O bonds and only 20 % in C-O- bonds. It can be assumed that from the total 9 % of oxygen 3 to 5 % are linked with Si atoms, a few percent with Zn and the remaining with Ca and carbon.

### 2.2 Inorganic Components in CBp

Inorganic elements are mainly Si from the silica, Zn originally from the ZnO and transformed into ZnS during the vulcanization step and possibly during pyrolysis (Darmstadt and co-workers). Sometimes small quantities of Ca are observed, most probably from vulcanizing additives, aging retarders and antioxidants.

### 2.3 Contaminations in CBp

**Inorganic components** can be considered as contaminants in a carbon black, for CBp SiO₂ and ZnO or ZnS will have to be considered as integral parts. Work done by Donnet and co-workers and Darmstadt and co-workers (A. Chaala, H. Darmstadt, C. Roy, Fuel Processing Technology 46, (1996) 1-5) have shown that the elimination of SiO₂ and ZnO or ZnS are a very time- and energy consuming step. They additionally showed that the surface chemistry of the product was not modified. The term contamination includes sulphur and other trace elements present in the carbon black as well as organic molecules carried over from the tire and mainly generated during the pyrolysis process.

Darmstadt and co-workers (H. Darmstadt, C. Roy, S. Kaliaguine, KGK, 47, N° 12, 1994) have studied the sulphur compounds in CBp as a function of the operating conditions. Sulphur is present in small quantities in most commercial carbon blacks. Although very small amounts of free sulphur may exist, it is usually present in organic molecules. Rubber companies may have in some cases limitations around 1.5% on total sulphur, however the main reason for the reduction of sulphur in commercial carbon black is environmental. In CBp sulphur is mainly present in ZnS, and according to Roy and co-workers, no free Sulphur has been detected on CBp.

Other elements, as listed in the attached Table IV, are coming from the tire. The level of these trace contaminations are not expected to interfere with most of the carbon black applications. This has been confirmed by the development work of the present inventors.

Two origins can be mentioned as the main source of such contaminations:
1. Contaminations from the various ingredients used in the tire.
2. Residues from the interface with the wire. They can be divided into two types: (1) Co from the rubber-to-metal bonding system, (2) Cu-Sulphur compounds from the interface with brass coated wire.

The type and level of the trace elements varies with the tire composition. Some elements may also appear in certain CBps at relatively high level, due to the use of catalysts and specific pyrolysis techniques.

**Table IV**

| | **norm** | **unit** | **value** |
|---|---|---|---|
| Si | DIN EN ISO 11885 / EN 13656 / EN 15410/11A / DIN 22022-1 | % (w/w) | 2,5 |
| Zn | DIN EN 13346 / DIN EN ISO 11885 | % (w/w) | 4,5 |
| Al | DIN EN 13346 / DIN EN ISO 11885 | % (w/w) | 0,1 |
| Ca | DIN EN 13346 / DIN EN ISO 11885 | % (w/w) | 1,1 |
| Fe | DIN EN 13346 / DIN EN ISO 11885 | % (w/w) | 0,1 |
| K | DIN EN 13346 / DIN EN ISO 11885 | % (w/w) | 0,1 |
| Mg | DIN EN 13346 / DIN EN ISO 11885 | % (w/w) | 0,1 |
| Na | DIN EN 13346 / DIN EN ISO 11885 | % (w/w) | 0,1 |
| Pb | DIN EN 13346 / DIN EN ISO 11885 | ppm | 56 |
| Cd | DIN EN 13346 / DIN EN ISO 11885 | ppm | 3 |
| Co | DIN EN 13346 / DIN EN ISO 11885 | ppm | 190 |
| Cu | DIN EN 13346 / DIN EN ISO 11885 | ppm | 155 |
| Mn | DIN EN 13346 / DIN EN ISO 11885 | ppm | 13 |
| Ni | DIN EN 13346 / DIN EN ISO 11885 | ppm | 3 |
| Hg | DIN EN 13346 / DIN EN ISO 11885 | ppm | <1 |
| Sn | DIN EN 13346 / DIN EN ISO 11885 | ppm | 76 |

| | | | |
|---|---|---|---|
| Element analysis of CCT R 632 (origin: GMBU Halle, Germany) | | | |

**Polyaromatic molecules** are today of quite important concern for health, safety and environmental reasons. Table V below illustrates typical values of polycyclic aromatic hydrocarbons (PAH) measured on CBp according to the US Environmental Protection Agency (EPA) and EC directives.

**Table V**

| ***PAHs according Directive 2005*/*69*/*EC*** | **unit** | **value** |
|---|---|---|
| Benzo(a)anthracene | ppm | 0,2 |
| Chrysene | ppm | 0,1 |
| Benzo(b)fluoranthene | ppm | 0,1 |
| Benzo(k)fluoranthene | ppm | < 0,1 |
| Benzo(a)pyrene | ppm | 0,1 |
| Dibenzo(a,h)anthracene | ppm | 0,2 |
| Benzo(e)pyrene | ppm | 0,1 |
| Benzo(j)fluoranthene | ppm | 0,2 |

| | | |
|---|---|---|
| PAHs according to EC Directive 2005/69/EC (origin: Plenum Ennepetal Germany) | | |

Commercial carbon blacks sometimes exhibit the presence of small quantities of organic residues. These residues result from the condensation of molecules onto the carbon black surface. The level of these residues depends on the operating conditions. Mainly short quenching is known to result in relatively high amounts of organic residues. CBp shows also some organic residues adsorbed on the surface. Analyses made on CBp blacks according to the EC directive and to EPA are given in Tables V and VI, respectively. The molecules listed in the EC directive appear to be present in very low quantities. Molecules listed in EPA are also present in very low levels for most of them except naphthalene and some of its substitutes.

**Table VI**

| ***PAHs according to EPA*** | **unit** | **value** |
|---|---|---|
| Naphthalene | ppm | 5,2 |
| Acenaphthylene | ppm | 4,2 |
| Acenaphthene | ppm | 2,1 |
| Fluorene | ppm | 0,4 |
| Phenanthrene | ppm | 0,6 |
| Anthracene | ppm | 0,3 |
| Fluoranthene | ppm | < 0,1 |
| Pyrene | ppm | 0,6 |
| Benzo(a)anthracene | ppm | 0,1 |
| Chrysene | ppm | < 0,1 |
| Benzo(b)fluoranthene | ppm | < 0,1 |
| Benzo(k)fluoranthene | ppm | < 0,1 |
| Benzo(a)pyrene | ppm | < 0,1 |
| Dibenzo(a,h)anthracene | ppm | 0,1 |
| Benzo(ghi)perylene | ppm | < 0,1 |
| Indeno(1,2,3-cd)pyrene | ppm | < 0,1 |

| | | |
|---|---|---|
| PAHs according to EPA (origin: Plenum Ennepetal Germany) | | |

**Solid undispersible particles,** commonly called sieve residue or grit are composed of carbonaceous particles, ash particles and metal.
- Metal particles from the separation of the wires from the carbon black can be avoided by an appropriate process design.
- Carbonaceous particles: CBp is ground after pyrolysis down to sizes below the typical 45 µm considered in the sieve residue analysis. This process step ensures very low sieve residue levels.

## Claims

1. A method for producing a carbon black-containing polyolefin compound, the method comprising incorporating carbon black obtainable by pyrolysis of carbon black filled crosslinked and/or uncrosslinked polymers into a polyolefin polymer, wherein the amount of said carbon black added is above the percolation threshold, defined as the lowest value of carbon black concentration at which the addition of one further weight percent carbon black into the polymer would result in a drop of resistivity of the resulting compound by more than a factor of 3, said amount being sufficient to produce a carbon black-containing polyolefin compound having a volume resistivity between 10² and 10¹² Ohm.cm, measured according to ASTM D 991 for the range ≤ 10⁶ Ohm.cm and to ASTM D 257 for the range > 10⁶ Ohm.cm.

2. The method according to claim 1, **characterized in that** an alteration of the carbon black content by ± 0.5 % (w/w) within the percolation zone, defined as the zone between the percolation threshold and highest value of carbon black concentration at which the removal of one weight percent carbon black from the polymer would result in an increase of resistivity of the resulting compound by more than a factor of 3, does not alter the volume resistivity of the resulting compound by more than a factor of 10.

3. The method according to claim 1 or 2, wherein the carbon black is obtainable by pyrolysis of cured or uncured carbon black containing rubber compounds, preferably by pyrolysis of used tires.

4. The method according to any one of claims 1 to 3, wherein the carbon black is obtainable by a process comprising
a) pyrolysis of filled crosslinked and/or uncrosslinked polymers, particularly cured or uncured rubber compounds, such as used tires, to obtain a pyrolysate;
b) optionally, treatment of the pyrolysate with inert gas(es) or gaseous reagent(s) during and/or after pyrolysis;
c) mechanical treatment of the pyrolysate to separate carbon black from residues such as metals and/or textiles;
d) optionally treatment of the pyrolysate with liquids leaching surface components and/or modifying the pyrolysate surface;
e) grinding the carbon black into particles; and
f) optionally, pelletizing or compacting the carbon black.

5. The method according to any one of claims 1 to 4, wherein the carbon black is **characterized by**
an ash content of between 1-30 % (w/w), particularly of between 12-20 % (w/w) of the total weight of the carbon black; and/or
a volume resistivity of between 0.02-1.0 Ohm.cm, particularly of between 0.08-0.2 Ohm.cm, more particularly of about 0.1 Ohm.cm.

6. The method according to any one of claims 1 to 5, wherein the carbon black is incorporated in an amount of between 5-80 % (w/w), or 10-60 % (w/w), or 15-50 % (w/w), or greater than 30% (w/w), of the total weight of the resulting compound.

7. The method according to any one of claims 1 to 6, wherein the compound is produced without additional resistivity adjusting additives.

8. The method according to any one of claims 1 to 6, further comprising incorporating one or more additional additives selected from other carbon black; natural, synthetic, or expanded graphite; white fillers such as kaolin, CaCO₃, talc, or clay; non miscible polymers; or polymer crystallites.

9. A method for expanding the range of carbon black content in a carbon black - containing polyolefin compound having a volume resistivity between and 10¹² Ohm.cm, or between 10⁴ and 10¹² Ohm.cm, measured according to ASTM D 991 for the range ≤ 10⁶ Ohm.cm and to ASTM D 257 for the range > 10⁶ Ohm.cm, comprising incorporating carbon black as defined in any one of claims 1 to 5 into a polyolefin polymer, in an amount above the percolation threshold, defined as the lowest value of carbon black concentration at which the addition of one further weight percent carbon black into the polymer would result in a drop of resistivity of the resulting compound by more than a factor of 3.

10. A carbon black-containing polyolefin compound having a having a volume resistivity between 10² and 10¹² Ohm.cm, or between 10⁴ and 10¹² Ohm.cm, measured according to ASTM D 991 for the range ≤ 10⁶ Ohm.cm and to ASTM D 257 for the range > 10⁶ Ohm.cm, comprising a polyolefin polymer and a pyrolytic carbon black as defined in any one of claims 1 to 5 incorporated in the polymer in an amount above the percolation threshold, defined as the lowest value of carbon black concentration at which the addition of one further weight percent carbon black into the polymer would result in a drop of resistivity of the resulting compound by more than a factor of 3.

11. The compound according to claim 10, wherein the carbon black is present in an amount of 5-80 % (w/w), or 10-60 % (w/w), or 15-50 % (w/w), or greater than 30% (w/w), of the total weight of the compound.

12. The compound according to claim 10 or claim 11, wherein the polyolefin polymer is selected from polyethylene (PE), low density polyethylene (LDPE), high density polyethylene (HDPE), crosslinked polyethylene (XLPE) and chlorinated polyethylene (CSM, CPE), preferably wherein the polyolefin is low density polyethylene.

13. Use of a compound according to any one of claims 10 to 12 as an antistatic or conductive material.

## Patentansprüche

1. Verfahren zur Herstellung einer Russ enthaltenden Polyolefinverbindung, wobei das Verfahren das Einarbeiten von Russ umfasst, der durch Pyrolyse von mit Russ gefüllten vernetzten und/oder unvernetzten Polymeren in ein Polyolefinpolymer erhältlich ist, wobei die Menge des zugegebenen Russes über der Perkolationsschwelle liegt, definiert als der niedrigste Wert der Russkonzentration, bei der die Zugabe von einem weiteren Gewichtsprozent Russ in das Polymer zu einem Abfall von spezifischen Widerstand der resultierenden Verbindung um mehr als einen Faktor 3 führen würde, wobei die Menge ausreicht, um eine Russ enthaltende Polyolefinverbindung mit einem spezifischen Durchgangswiderstand zwischen 10² und 10¹² Ohm.cm, gemessen gemäß ASTM D 991 für den Bereich ≤, 10⁶ Ohm.cm und ASTM D 257 für den Bereich > 10⁶ Ohm.cm herzustellen.

2. Verfahren nach Anspruch 1, **dadurch gekennzeichnet, dass** eine Veränderung des Russgehaltes um ± 0,5 % (w/w) innerhalb der Perkolationszone, definiert als die Zone zwischen der Perkolationsschwelle und dem höchsten Wert der Russkonzentration, bei der die Entfernung von einem Gewichtsprozent Russ aus dem Polymer zu einer Erhöhung des spezifischen Widerstands der resultierenden Verbindung um mehr als einen Faktor von 3 führen würde, den Durchgangswiderstand der resultierenden Verbindung nicht um mehr als einen Faktor von 10 verändert.

3. Verfahren nach Anspruch 1 oder 2, wobei der Russ durch Pyrolyse von gehärteten oder ungehärteten russhaltigen Kautschukmischungen erhältlich ist, vorzugsweise durch Pyrolyse von Altreifen.

4. Verfahren nach einem der Ansprüche 1 bis 3, wobei der Russ erhältlich ist durch ein Verfahren umfassend
a) Pyrolyse von gefüllten vernetzten und/oder unvernetzten Polymeren, insbesondere vulkanisierte oder unvulkanisierte Kautschukmischungen, wie gebrauchte Reifen, um ein Pyrolysat zu erhalten;
b) gegebenenfalls Behandlung des Pyrolysats mit Inertgas(en) oder gasförmigem(n) Reagenz(ien) während und/oder nach Pyrolyse;
c) mechanische Behandlung des Pyrolysats zur Abtrennung von Russ von Rückständen wie Metallen und/oder Textilien;
d) gegebenenfalls Behandlung des Pyrolysats mit Flüssigkeiten, die Oberflächenkomponenten auslaugen und/oder die Pyrolysatoberfläche modifizieren;
e) Mahlen des Russes zu Partikeln; und
f) gegebenenfalls Pelletieren oder Kompaktieren des Russes.

5. Verfahren nach einem der Ansprüche 1 bis 4, wobei der Russ **gekennzeichnet ist durch**
einen Aschegehalt zwischen 1-30 % (w/w), vor allem zwischen 12-20 % (w/w) des Gesamtgewichts des Russes; und/oder einen spezifischen Durchgangswiderstand zwischen 0,02-1,0 Ohm.cm, insbesondere zwischen 0,08-0,2 Ohm.cm, insbesondere etwa 0,1 Ohm.cm.

6. Verfahren nach einem der Ansprüche 1 bis 5, wobei der Russ in einer Menge zwischen 5 und 80 % (w/w), oder 10-60 % (w/w), oder 15-50 % (w/w), oder mehr als 30 % (w/w) des Gesamtgewichts der resultierenden Verbindung eingearbeitet wird.

7. Verfahren nach einem der Ansprüche 1 bis 6, wobei die Verbindung ohne zusätzliche widerstandseinstellende Additive hergestellt wird.

8. Verfahren nach einem der Ansprüche 1 bis 6, ferner umfassend das Einarbeiten eines oder mehrerer zusätzlicher Additive, ausgewählt aus anderem Russ; natürlicher, synthetischer oder expandierter Graphit; weiße Füllstoffe wie Kaolin, CaCO₃, Talk oder Ton; nicht mischbare Polymere; oder Polymerkristallite.

9. Ein Verfahren zum Erweitern des Bereichs des Russgehalts in einer Russ enthaltenden Polyolefinverbindung mit einem spezifischen Durchgangswiderstand zwischen 10² und 10¹² Ohm.cm oder zwischen 10⁴ und 10¹² Ohm.cm, gemessen gemäß ASTM D 991 für den Bereich ≤ 10⁶ Ohm.cm und ASTM D 257 für den Bereich > 10⁶ Ohm.cm, umfassend das Einarbeiten von Russ nach einem der Ansprüche 1 bis 5 in ein Polyolefinpolymer in einer Menge oberhalb der Perkolationsschwelle, definiert als der niedrigste Wert der Russkonzentration, bei der die Zugabe eines weiteren Gewichtsprozent Russ in das Polymer zu einem Abfall des spezifischen Widerstands der resultierenden Verbindung um mehr als einen Faktor 3 führen würde.

10. Russ enthaltende Polyolefinverbindung mit einem spezifischen Durchgangswiderstand zwischen 10² und 10¹² Ohm.cm, oder zwischen 10⁴ und 10¹² Ohm.cm, gemessen nach ASTM D 991 für den Bereich ≤ 10⁶ Ohm.cm und nach ASTM D 257 für den Bereich > 10⁶ Ohm.cm, umfassend ein Polyolefinpolymer und einen pyrolytischen Russ nach einem der Ansprüche 1 bis 5, eingearbeitet in das Polymer in einer Menge oberhalb der Perkolationsschwelle, definiert als der niedrigste Wert der Russkonzentration, bei dem die Zugabe von einem weiteren Gewichtsprozent Russ in das Polymer zu einem Abfall des spezifischen Widerstandes der resultierenden Verbindung um mehr als den Faktor 3 führen würde.

11. Verbindung nach Anspruch 10, wobei der Russ in einer Menge von 5-80 % (w/w), oder 10-60 % (w/w), oder 15-50 % (w/w), oder mehr als 30 % (w/w) des Gesamtgewichts der Verbindung vorhanden ist.

12. Verbindung nach Anspruch 10 oder Anspruch 11, wobei das Polyolefinpolymer ausgewählt ist aus Polyethylen (polyethylene, PE), Polyethylen niedriger Dichte (low density polyethylene, LDPE), Polyethylen hoher Dichte (high density polyethylene, HDPE), vernetztem Polyethylen (crosslinked polyethylene, XLPE) und chloriertem Polyethylen (chlorinated polyethylene, CSM, CPE), wobei das Polyolefin vorzugsweise Polyethylen niedriger Dichte ist.

13. Verwendung einer Verbindung nach einem der Ansprüche 10 bis 12 als antistatisches oder leitfähiges Material.

## Revendications

1. Procédé de production d'un composé polyoléfinique contenant du noir de carbone, le procédé comprenant l'incorporation de noir de carbone pouvant être obtenu par pyrolyse de polymères chargés de noir de carbone réticulés et/ou non réticulés en un polymère polyoléfinique, dans lequel la quantité dudit noir de carbone ajoutée est supérieure au seuil de percolation, défini comme étant la valeur la plus faible de concentration en noir de carbone à laquelle l'ajout d'un pour cent en poids supplémentaire de noir de carbone dans le polymère entraînerait une chute de résistivité du composé résultant de plus d'un facteur 3, ladite quantité étant suffisante pour produire un composé polyoléfinique contenant du noir de carbone ayant une résistivité volumique comprise entre 10² et 10¹² Ohm.cm, mesurée selon la norme ASTM D 991 pour la plage ≤ 10⁶ Ohm.cm et la norme ASTM D 257 pour la plage > 10⁶ Ohm.cm.

2. Procédé selon la revendication 1, **caractérisé en ce qu'**une modification de la teneur en noir de carbone de ± 0,5 % (en poids) dans la zone de percolation, définie comme étant la zone entre le seuil de percolation et la valeur la plus élevée de la concentration en noir de carbone à laquelle l'élimination d'un pour cent en poids de noir de carbone du polymère entraînerait une augmentation de la résistivité du composé résultant de plus d'un facteur 3, ne modifie pas la résistivité volumique du composé résultant de plus d'un facteur 10.

3. Procédé selon la revendication 1 ou 2, dans lequel le noir de carbone peut être obtenu par pyrolyse de composés de caoutchouc contenant du noir de carbone durcis ou non durcis, de préférence par pyrolyse de pneus usagés.

4. Procédé selon l'une quelconque des revendications 1 à 3, dans lequel le noir de carbone peut être obtenu par un procédé comprenant
a) la pyrolyse de polymères chargés réticulées et/ou non réticulés, notamment les composés de caoutchouc durcis ou non durcis, tels que des pneus usagés, pour obtenir un pyrolysat ;
b) éventuellement, le traitement du pyrolysat avec un ou des gaz inerte(s) ou un ou des réactif(s) gazeux pendant et/ou après la pyrolyse ;
c) le traitement mécanique du pyrolysat pour séparer le noir de carbone des résidus tels que les métaux et/ou les textiles ;
d) éventuellement le traitement du pyrolysat avec des liquides lessivant des composants de surface et/ou modifiant la surface du pyrolysat ;
e) le broyage du noir de carbone en particules ; et
f) éventuellement, le pastillage ou le compactage du noir de carbone.

5. Procédé selon l'une quelconque des revendications 1 à 4, dans lequel le noir de carbone est **caractérisé par** une teneur en cendres comprise entre 1 et 30 % (en poids), en particulier entre 12 et 20 % (en poids) du poids total du noir de carbone ; et/ou
une résistivité volumique comprise entre 0,02 et 1,0 Ohm.cm, en particulier comprise entre 0,08 et 0,2 Ohm.cm, plus particulièrement d'environ 0,1 Ohm.cm.

6. Procédé selon l'une quelconque des revendications 1 à 5, dans lequel le noir de carbone est incorporé en une quantité comprise entre 5 et 80 % (en poids), ou entre 10 et 60 % (en poids), ou entre 15 et 50 % (en poids), ou supérieure à 30 % (en poids), du poids total du composé résultant.

7. Procédé selon l'une quelconque des revendications 1 à 6, dans lequel le composé est produit sans additifs d'ajustement de résistivité supplémentaires.

8. Procédé selon l'une quelconque des revendications 1 à 6, comprenant en outre l'incorporation d'un ou plusieurs additifs supplémentaires choisis parmi d'autres noirs de carbone ; du graphite naturel, synthétique ou expansé ; des charges blanches telles que le kaolin, le CaCO₃, le talc ou l'argile ; des polymères non miscibles ; ou des cristallites de polymère.

9. Procédé pour élargir la plage de teneur en noir de carbone d'un composé polyoléfinique contenant du noir de carbone ayant une résistivité volumique comprise entre 10² et 10¹² Ohm.cm, ou entre 10⁴ et 10¹² Ohm.cm, mesurée selon la norme ASTM D 991 pour la plage ≤ 10⁶ Ohm.cm et la norme ASTM D 257 pour la plage > 10⁶ Ohm.cm, comprenant l'incorporation de noir de carbone tel que défini dans l'une quelconque des revendications 1 à 5 dans un polymère polyoléfinique, en une quantité supérieure au seuil de percolation, défini comme étant la valeur la plus faible de concentration en noir de carbone à laquelle l'ajout d'un pour cent en poids supplémentaire de noir de carbone dans le polymère entraînerait une chute de la résistivité du composé résultant de plus d'un facteur 3.

10. Composé polyoléfinique contenant du noir de carbone ayant une résistivité volumique comprise entre 10² et 10¹² Ohm.cm, ou entre 10⁴ et 10¹² Ohm.cm, mesurée selon la norme ASTM D 991 pour la plage ≤ 10⁶ Ohm.cm et la norme ASTM D 257 pour la plage > 10⁶ Ohm.cm, comprenant un polymère polyoléfinique et du noir de carbone pyrolytique tel que défini dans l'une quelconque des revendications 1 à 5 incorporé dans le polymère en une quantité supérieure au seuil de percolation, défini comme étant la valeur la plus faible de concentration en noir de carbone à laquelle l'ajout d'un pour cent en poids supplémentaire de noir de carbone dans le polymère entraînerait une chute de résistivité du composé résultant de plus d'un facteur 3.

11. Composé selon la revendication 10, dans lequel le noir de carbone est présent en une quantité de 5 à 80 % (en poids), ou de 10 à 60 % (en poids), ou de 15 à 50 % (en poids), ou supérieure à 30 % (en poids), du poids total du composé.

12. Composé selon la revendication 10 ou la revendication 11, dans lequel le polymère polyoléfinique est choisi parmi le polyéthylène (PE), le polyéthylène basse densité (LDPE), le polyéthylène haute densité (HDPE), le polyéthylène réticulé (XLPE) et le polyéthylène chloré (CSM, CPE), de préférence dans laquelle la polyoléfine est le polyéthylène basse densité.

13. Utilisation d'un composé selon l'une quelconque des revendications 10 à 12 comme matériau antistatique ou conducteur.
